# EUROPEAN PATENT SPECIFICATION

(11) **EP 3 057 846 B1**
(45) Date of publication and mention of the grant of the patent: **25.04.2018**
(21) Application number: 14787002.6
(22) Date of filing: 15.10.2014
(51) Int. Cl.: B62B 7/10, B62B 9/26, A45C 5/14

(54) **CHILD CARRIER**
TRANSPORTVORRICHTUNG FÜR KINDER
DISPOSITIF DE TRANSPORT POUR ENFANTS

(30) Priority: 15.10.2013 GB 201318238
(43) Date of publication of application: 24.08.2016
(73) Proprietor: Sheikh, Khadeeja, Ilford, Essex IG6 1LB (GB); Irsch, Shira, Ilford, Essex IG6 1LB (GB)
(72) Inventor: Sheikh, Khadeeja, Ilford, Essex IG6 1LB (GB); Irsch, Shira, Ilford, Essex IG6 1LB (GB)
(74) Representative: JENSEN & SON
(86) International application number: PCT/GB2014/000418
(87) International publication number: WO 2015/055978

(56) References cited:
- WO-A1-2013/144545
- GB-A- 2 491 552
- US-A1- 2012 161 408
- US-B1- 8 182 030

## Description

The present invention relates to a child carrier which provides storage space, in particular, but not exclusively, to a child carrier foldable into the shape of a suitcase.

Travelling with children is notoriously difficult, especially if travelling by plane, as young children are often unable to cope with the length and complexity of airport waiting periods and security checks. Further, security and airline regulations frequently require parents or other adults responsible for young children to forego certain comforts, such as trolleys, buggies or pushchairs used to transport young children and also to provide them with a comfortable seat on which to rest or sleep if necessary. Accordingly, adults travelling with young children typically carry them on their arms or backs and also on specially designed carriers.

Frontal baby carriers are well-known devices typically used by adults to carry a small child; however, this type of carrier is typically impractical if storage space for the child's effects is necessary. Hiking child carriers, which resemble backpacks, occasionally provide some storage space. Nevertheless, these types of carriers are rather uncomfortable for the child and/or the adult and do not provide appropriate storage capabilities, making a separate case or backpack necessary. Further, these carriers are not always accepted as carry-on luggage.

Recently, children-specific luggage combining carrying capabilities with storage space has been developed by luggage companies and entrepreneurs. For example, ride-on suitcases such as TRUNKI (RTM) and SKOOT (RTM) are a familiar sight at airports. Nevertheless, ride-on suitcases suffer from some serious disadvantages; for example, they cannot be used by very small children as body stability is required to ride on the suitcase, they do not provide means to secure a child onto the suitcase and storage space is confined to the central part of the suitcase which means that the storage space cannot be accessed or opened while a child is riding-on the suitcase. As a result, ride-on suitcases are used mainly as toys to keep kids entertained and allow them to be carried in a more convenient manner.

Other child-carrying devices such as US8182030, relate to child carrier luggage assemblies comprising a case with wheels and a seat assembly coupled to the front of the case. The seat assembly includes a seat member connected to the case by a hinge and a strap member which acts as a backrest and provides straps for securing the child. The seat assembly also includes a pedestal which is arranged to support the seat member when the seat assembly is in use. This type of device suffers from several problems, such as being uncomfortable and awkward for the child because the position of the seat relative to the suitcase makes it necessary to tilt the seat to pull the case. Further, the front pocket arranged to house the folding seat interferes with movement of the bag as it drags on the floor when unzipped.

US2012/0161408 discloses a suitcase arranged to provide a storage compartment, the suitcase comprising a child seat, a back support; a collapsible handle secured to the suitcase, rollers secured to the suitcase and arranged to allow the child carrier to be wheeled along; wherein the child seat is a moulded seat cavity located at the very top of the suitcase. This particular suitcase suffers from the problem of being unsafe, and also non-compliant with European Standard EN1888:2012, because the child receiving seat is at the top of the case.

GB2430612 discloses a wheeled suitcase having a detachable seat pad which is adapted to be secured to the handle so that, in use, a child may sit on the seat pad and use the upper surface of the case as a seat and the seat pad covered handle as a backrest. A harness is provided on the seat pad and the case to secure the child. This device is inadequate because in order to allow a child to use it, an adult would have to carry additional equipment, i.e. the seat pads, and, in addition, the handle would probably push into the child's back regardless of the seat pad and so it would be rather uncomfortable.

DE19952448 describes a suitcase which can be converted into a pushchair by providing an integral reinforcing element arranged to secure an open case which provides space for a child to seat. In use, the suitcase is opened and its sides used as a seat and backrest respectively; thus, the device does not provide any storage space for the child's belongings.

JP9-000329 describes another suitcase which can be converted into a push chair by providing a support member comprising plate material extending outwardly from a lower part of the side end of a first housing chamber to support the bottom surface of a second housing chamber. The first and second housing chambers provide a seat and backrest respectively. In addition, the first and second housing chambers offer some storage space. However, the device is overly complicated to use and uncomfortable. US2010/0059970, US 2010/0072012 and WO 2005/074507 disclose suitcases adapted to receive a child carriers similar to car seats and to use the handle as a back support for the child carrier. These devices are impractical for travelling as the child carriers disclosed therein are in essence car seats and therefore do not offer any improvements over standard car seats.

GB2491552 discloses a child carrier according to the preamble of claim 1, and refers to a multi-purpose apparatus for use as a car safety seat, pushchair and bed, which apparatus is collapsible into a suitcase. The apparatus comprises a backrest, a seat connected to the backrest, a first wheel assembly, a second wheel assembly, a telescopic handle and a pair of brackets. The handle and brackets are connected to the backrest. The seat is pivotable about the backrest on a first axis , the first wheel assembly is pivotable around a second axis to move relative to the seat and the second wheel assembly is pivotable around a third axis to move relative to the backrest. In a pushchair configuration, the first and second wheel assemblies are extended away from the seat and backrest respectively and the second wheel assembly is held in place by the pair of brackets. WO 2013/144545 A1 relates to a luggage device having a body comprising a fixed portion and a moveable portion connected to the fixed portion by a hinge which allows the movable portion to pivot in relation to the fixed portion. The moveable portion can be unfolded from a closed position into a deployed position to define a footrest and a child seat. The device further comprises a slidable backrest arranged to be stored in a recess when the device is in the closed position and to slide over and be supported by a handle when the suitcase is in the deployed position. A first set of wheels is a set of fixed wheels is provided on the base of the device and a the second set of wheels is a pair of small stability wheels provided on a pair of castors. Each castor is connected to a shaft and both shafts are connected at the base by a bar.

As discussed above, known child carriers suitable for air travel suffer from several disadvantages and can be quite impractical. Even popular child carriers have drawbacks such as being unsuitable for use by babies. In essence, traditional child carriers such as buggies have to be handed in when travelling by air and none of the child carriers suitable for air travel described in the prior art provide full child carrier functionalities combined with the ability to be taken on an airplane as carry-on luggage.

The child carrier of the present invention seeks to minimise or solve the problems present in the child carriers suitable for air travel described in the prior art. In a preferred embodiment, the present invention seeks to provide a child carrier which conforms to standard carry-on luggage dimensions.

According to the present invention there is provided a child carrier as defined in claim 1. Preferred embodiments are defined in the dependent claims.

There is provided a child carrier comprising: a housing arranged to provide a storage compartment, a seat and a backrest; a handle secured to a first side of the housing and arranged to allow the child carrier to be manoeuvred, wherein the first side of the housing comprises an upper portion and a lower portion the upper portion being arranged to receive the handle; at least two wheels arranged to allow the child carrier to be wheeled along, the at least two wheels (116, 216, 316, 416) being axially secured to respective legs, which legs are provided on two opposite edges of the first side of the housing, wherein the lower portion of the first side of the housing is arranged to receive the legs; and further wheels provided on a lower end of the lower portion of the first side of the housing wherein either the seat or at least a portion of the backrest is movable relative to the storage compartment from a folded position to an operative position, in which operative position the child seat and backrest are arranged to receive a child to be transported, and wherein the storage compartment is accessible when the child carrier is in the folded position and when the child carrier is in the operative position; wherein, when in the folded position, the child carrier forms a substantially box-shaped suitcase and the wheels are moveable to lie within a profile of the substantially box-shaped suitcase; wherein each leg is substantially parallel to the handle when the child carrier is in a folded position; and wherein the handle is extendable from a closed position lying within the profile of the substantially box-shaped suitcase characterised in that the child carrier further comprises a transverse shaft provided on the lower portion of the first side of the housing, the transverse shaft being arranged to fasten one leg to the other leg to allow the legs to move synchronously, and in that, when the child carrier is in the operative position, an axis defined by the legs is generally perpendicular to a plane defined by the handle and the further wheels remain on a plane generally parallel to the plane defined by the handle.

A child carrier according to preferred embodiments of the present invention is advantageous over known child carriers because it provides the same functions as a traditional buggy but can be used to carry a child to the plane seat, and can be stowed by a parent in the overhead lockers provided in an airplane cabin as it complies with standard carry-on luggage dimensions and therefore does not need to be checked in as hold luggage.

Advantageously, either the seat or the backrest is connected to the housing by a hinge. This feature enables the child carrier to be compact and easy to use. In a preferred embodiment, at least a portion of the backrest is a foldable element. In a further preferred embodiment, the seat is moulded integrally in a surface of the first part in order to increase compactness.

In another preferred embodiment, the housing is substantially rigid. This feature makes the child carrier is structurally robust.

Preferably, when in the folded position, the child carrier forms a substantially box-shaped suitcase. More preferably, the wheels are co-axial and preferably lie within a profile of the substantially box-shaped suitcase. These features are beneficial because they allow space to be utilised effectively and at the same time also improve compactness.

Advantageously, the child carrier, when in the folded position, has dimensions not exceeding 56 cm by 45 cm by 25cm ± 1 cm. In a preferred embodiment, the child carrier, when in the folded position, has dimensions of approximately 50 cm by 25 cm by 20 cm ± 1 cm. These dimensions are within the standard carry-on luggage requirements and therefore enable the child carrier to be taken into an aircraft as hand luggage.

Preferably, the at least two wheels are omni wheels to improve manoeuvrability and facilitate lateral movement of the child carrier.

In a preferred embodiment, the child carrier further comprises a harness, which may be a two, three, four or five-point harness, to secure a child to the child carrier. This feature allows the child to be secured onto the child carrier and thus also allows smaller children to be carried safely by the carrier.

Preferably, the seat comprises a side access point arranged to allow a user to access the storage compartment while a child is seated on the child carrier.

In a preferred embodiment, the housing is made of moulded plastic materials. This feature has the advantage of allowing the child carrier to be produced at relatively low expense.

In a preferred embodiment, further wheels are provided on the foldable footrest. This feature is useful as it improves manoeuvrability of the child carrier.

Preferred embodiments of the present invention will now be described, by way of example, with reference to the accompanying drawings, in which:
Figure 1 is a perspective view of a child carrier according to a first embodiment of the present invention;
Figure 2 is a side view of the child carrier of Figure 1 in a fully collapsed position;
Figure 3 is a perspective view the child carrier of Figure 1 in a fully extended position;
Figure 4 is a perspective view of the child carrier of Figure 3 whilst in use;
Figure 5 is a perspective view of a wheel used in a preferred embodiment of the present invention;
Figure 6 is a perspective view of a child carrier according to a second embodiment of the present invention;
Figure 7 is a top perspective view of the child carrier of Figure 6 in a fully collapsed position;
Figure 8 is a back view of the view of the child carrier of Figure 6 in a fully collapsed position;
Figure 9 is a perspective view the child carrier of Figure 6 in a fully extended position;
Figure 10 is a perspective view of the child carrier of Figure 6 whilst in use;
Figure 11 is a side view of a child carrier according to a third embodiment of the present invention in a fully collapsed position;
Figure 12 is a perspective view of the child carrier of Figure 12;
Figure 13 is a perspective view of a child carrier of the third embodiment of the present invention in a fully extended position;
Figure 14 is a back view of the child carrier of Figure 14;
Figure 15 is a side view of the child carrier of Figure 14;
Figure 16 is a side view of a child carrier of the third embodiment of the present invention when the handle is extended;
Figure 17 is a perspective view of a child carrier of the third embodiment of the present invention when the handle is extended
Figure 18 is a front perspective view of a child carrier according to a fourth embodiment of the present invention;
Figure 19 is a back perspective view of the child carrier of Figure 18;
Figure 20 is a side view of the child carrier of Figure 18;
Figure 21 is a perspective view of the child carrier of the fourth embodiment of the present invention in a fully extended position; and
Figure 22 is a cut out detailed view of the seating arrangement used in the fourth embodiment of the present invention.

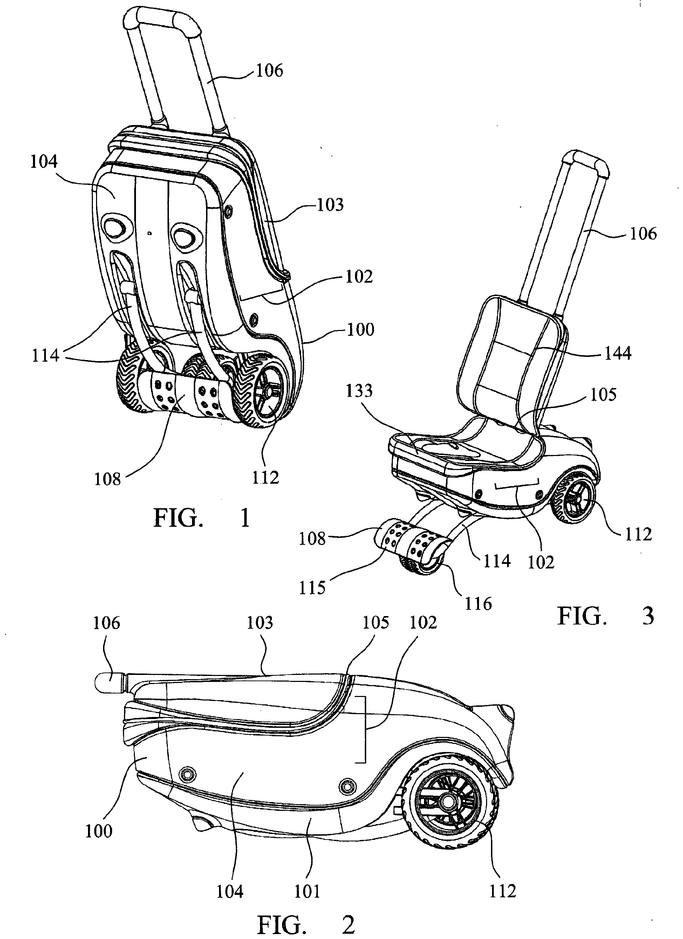

Figures 1, 2 and 3 show a foldable child carrier comprising a substantially rigid housing 100 shaped substantially as a box article. The housing 100 is formed by first and second parts 103, 104 made from synthetic moulded plastics pivotably connected to each other by a hinge 105. When the child carrier is opened into an extended operative position, as described in detail below with reference to Figure 3, a surface of the first part 103 forms a seat 133 moulded integrally in the first part 103; a surface of the second part 104 forms a backrest 144. A storage compartment 102 is provided by a space inside the first part 103, below the seat 133. A telescopic handle 106 is mounted on the second part 104 of the housing 100. The height of the telescopic handle 106 is adjustable and lockable in at least two positions to allow users of different heights to pull or push the child carrier. Wheels 112 are mounted on the edges of the lower end of an outer surface 101 of the housing 100. A foldable footrest 108 pivots between an extended position and a folded position wherein the foldable footrest 108 is received between the wheels 112 and rests against the housing 100. The foldable footrest 108 comprises a pair of substantially parallel tubes 114 secured to the housing 100 by a pivotable connection at one end and secured to two further wheels 116 rotatable about a common axis at the other end. In a fully retracted position, as shown in Figure 2, the child carrier complies with standard airline measurement requirements for hand or carry-on luggage, that is, the collapsed child carrier does not exceed 56 cm by 45 cm by 25 cm ± 1 cm and can therefore be stowed in an overhead compartment of an aircraft cabin.

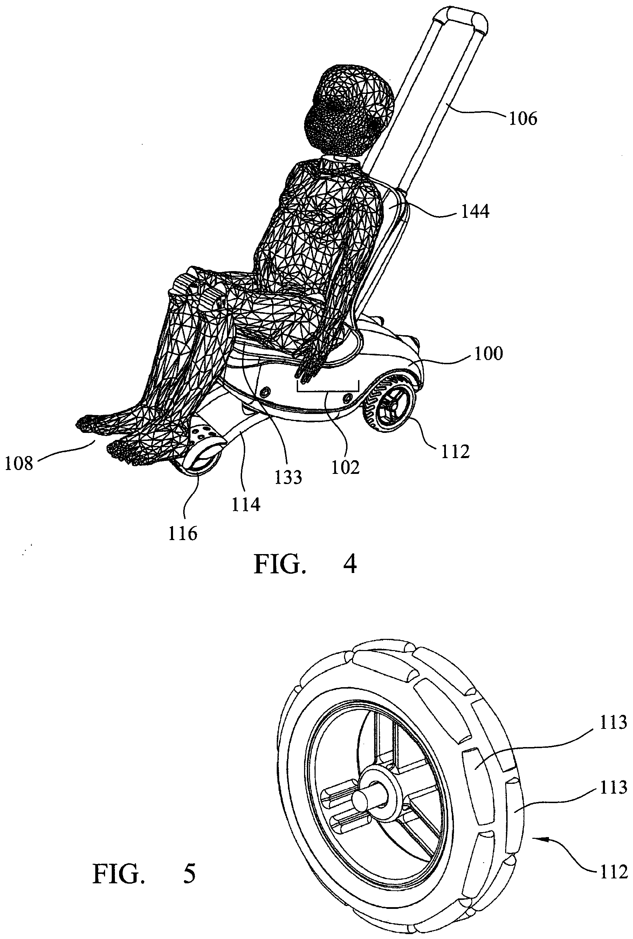

Referring now to Figures 3 and 4, there is shown the foldable child carrier of the present invention in an extended operative position wherein the backrest 144 is pivoted away from the seat 133 and secured by any suitable locking means, such as a locking mechanism having a pin or a detent, to provide a child seat. In use, a child is received in the seat 133 and backrest 144 and the child's feet are supported by a surface 115 on the footrest 108. The child carrier can be wheeled on the wheels 112 and the further wheels 116. A harness can be provided to secure the child to the child seat; the harness may be a two, three, four or five-point harness (not shown). The storage compartment 102 is located in the space inside the first part 103, below the seat 133, and is accessible when the carrier is in the collapsed position or in the extended operative position by a side access point (not shown) which allows a user to reach any item stored inside the storage compartment 102 without disturbing the child. The side access point comprises a zip, a depressible lever or other fastening means such as hook and loop fastener to ensure the storage compartment 2 is easily reachable.

Referring now to Figure 5, in a preferred embodiment, the wheels 112 and/or further wheels 116 are omni wheels. An omni wheel 112, 116 comprises a plurality of rotatable rollers 113 disposed about the circumference of the wheel having an axis of rotation tangential to the wheel circumference. The axes of rotation of the plurality of rotatable rollers 113 are substantially perpendicular to the axis of rotation of the wheel. This type of wheel improves manoeuvrability to facilitate lateral movement of the child carrier and is sufficiently sturdy to bear the weight of the child carrier and the child.

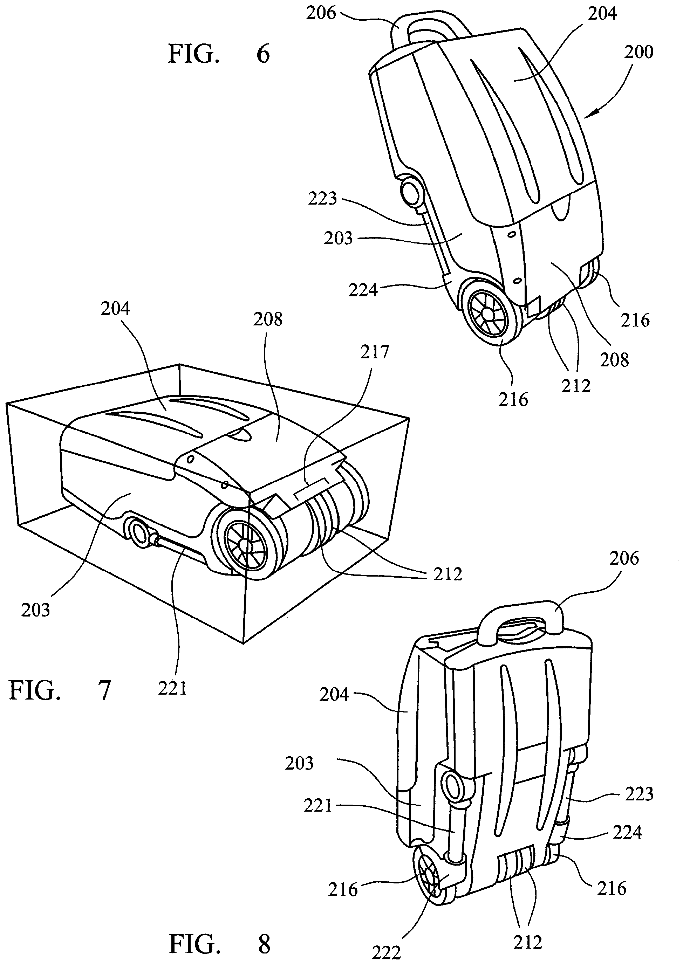

Referring now to Figures 6, 7 and 8, there is shown a collapsible child carrier according to a second embodiment of the present invention, which collapsible child carrier also comprises a substantially rigid housing 200 having first and second parts 203, 204 and arranged to be collapsible into a substantially suitcase shaped article. The housing 200 therefore has six substantially oblong-shaped surfaces forming an upper and bottom surface, two side surfaces and anterior and posterior surfaces. In this second embodiment, the first and second parts 203, 204 are made from the same materials as those described in relation to the first embodiment and are also pivotally connected to each other by a hinge; however, in this embodiment, the hinge is located on the upper end of the anterior surface of the housing at a point contiguous the upper surface of the housing. A telescopic handle 206 is provided on the rear part of the housing; the telescopic handle is also adjustable and lockable in two positions to allow users of different heights to manoeuvre the child carrier. Wheels 212 are provided on the lower surface of the housing, A foldable footrest 208 is pivotally connected to the lower end of the housing and has a clearance gap 217 for the wheels 212 so that in the collapsed position the footrest rests flush against the housing 200 and a receiving surface 215 is concealed. A pair of substantially parallel shafts 221, 223, each pivotally connected to a side surface of the housing 200 close to the rear surface, are provided with swivels 222, 224 arranged to connect to further wheels 216 so as to form castors. Each castor is connected to a shaft 221, 223. The side surfaces of the housing 200 have a reduced cross-section on the bottom end contiguous to the rear surface so that in the collapsed position, the shafts 221, 223, swivels 222, 224 and further wheels 216 lie substantially within the overall profile of the box-shaped suitcase. A storage compartment 202 is provided within the first part of the housing 200 and is accessible by a side opening or access point having a zip, a depressible lever, or other fastening means such as hook and loop fastener. It should be noted that as the side opening is provided on the side of the housing 200, the storage compartment 202 is accessible both when the child carrier in in a collapsed position and when it is in used in the extended position to carry a child.

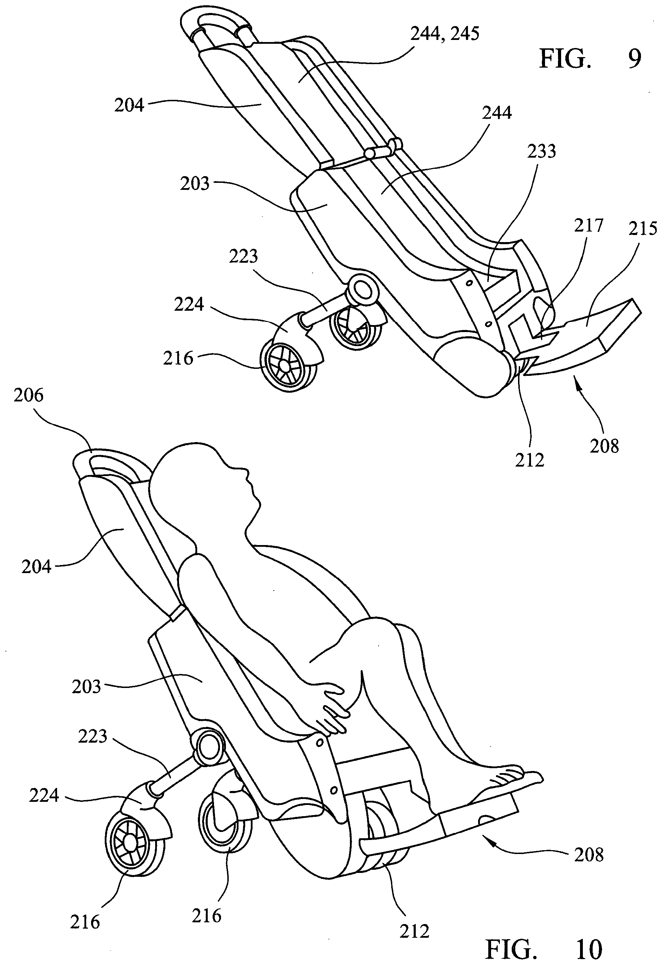

Figures 9 and 10 show a child carrier according to a second embodiment of the present invention in a fully extended operative position. In use, the carrier user would rotate the second part 204 around an axis towards the telescopic handle 206 thereby providing a backrest 244 and headrest 255 on a surface concealed in the collapsed position; the second part 204 is secured in the operative position by a suitable locking mechanism such as a pin or detent. At the same time, by providing pivotal movement of the second part 204, the user would expose a surface on the first part 3, which surface is profiled to provide a backrest 244 and a seat 233. The footrest 208 is pivoted away from the first part 203 so that surface 215 is exposed and arranged at an angle generally perpendicular to the axis of the housing 200 to receive a child's feet; a further locking mechanism (not shown) enables the footrest to be secured in the operative position. Operation of the telescopic handle allows it to slide into either one of the two lockable positions which allows the user to manoeuvre the child carrier. Further, the user pivots the shafts 221, 223 away from the housing 200 to provide a rear set of castor wheels 16. A harness is provided to secure the child to the child seat. The inner storage compartment is accessible while the child carrier is in the operative position

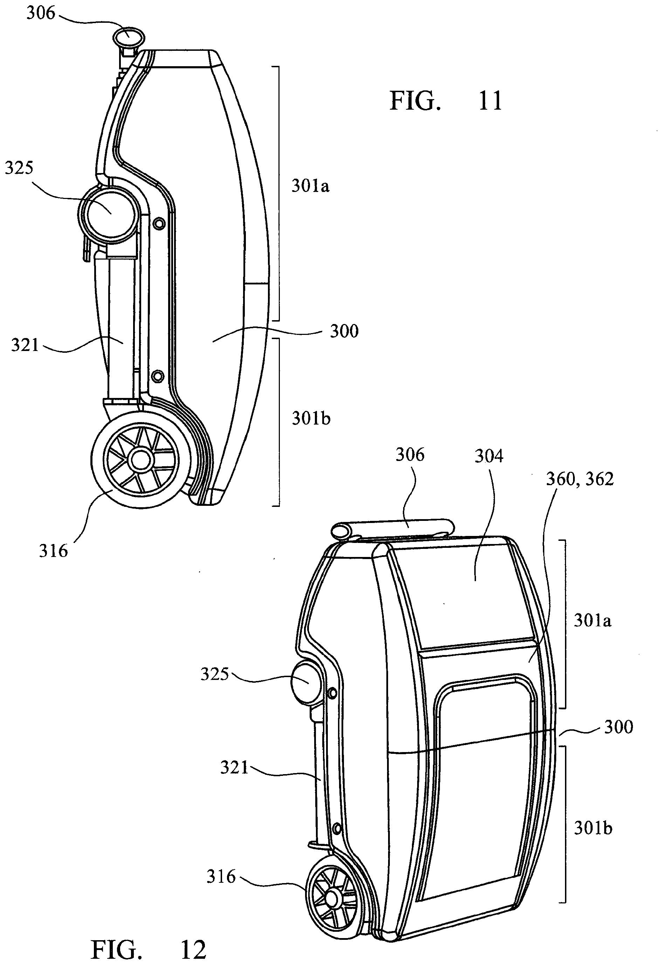

Figures 11 and 12 show a child carrier, in a collapsed position, according to a third embodiment of the present invention. The child carrier comprises a substantially rigid rectangular housing 300 having six substantially oblong-shaped surfaces or sides as the housing of the first and second embodiments. A telescopic handle 306 is provided on the rear surface or side of the housing 300. Legs 321, 323 are provided on two opposite edges of the rear side of the housing 300, each leg 321, 323 being, when in the collapsed position, substantially parallel to the telescopic handle 306. Each leg 321, 323 is, at one end, pivotably rotationally fast to a pivotable transverse shaft 325 located horizontally on the rear side of the housing 300. Each leg 321, 323 is axially connected to a wheel 316 on the other end. The lower part of the rear side has a reduced cross-section to allow the legs 321, 323 and wheels 316 to lie within the overall profile of the housing 300 in the collapsed position. The legs 321, 323 are pivotable from the collapsed position to a fully extended position as described below. As in previous embodiments, the telescopic handle 306 is adjustable and can be locked in at least two different positions. The front side of the housing 300 is divided into an upper part 301a and a lower part 301b. The upper part 301a comprises a foldable element 304 arranged to fold into a substantially rectangular space on the higher portion of the upper part 301a to lie within the overall profile of the housing 300 in the collapsed position. An opening 360 having a cover 362 is provided on the lower half of the upper part 301a. The opening 360 is operable to provide access to a storage compartment 302 inside the housing 300. In this particular embodiment, the cover 362 is fastened by means of a zip or a depressible lever, comparable to those found in commercially available suitcases.

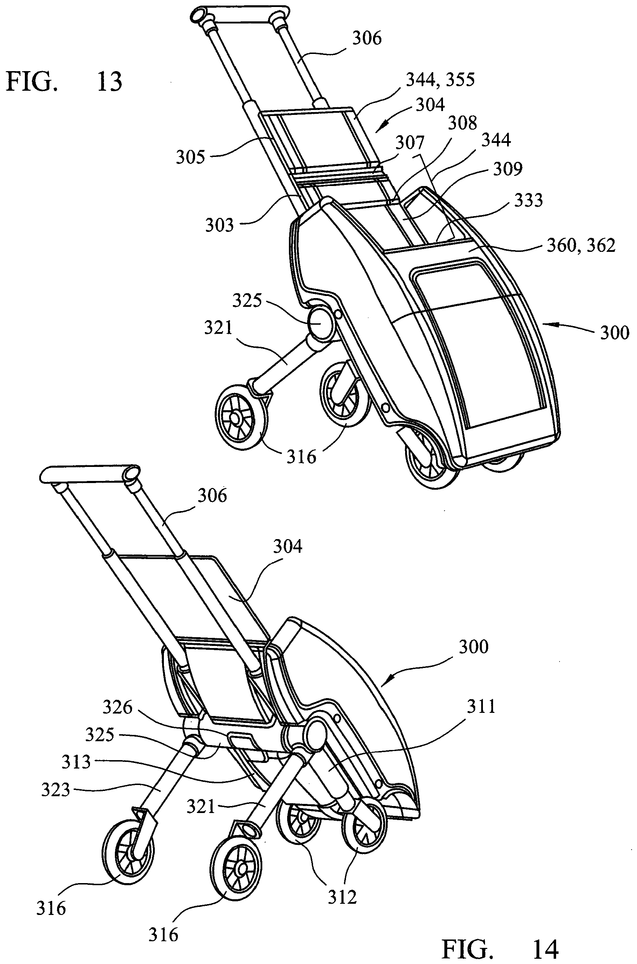

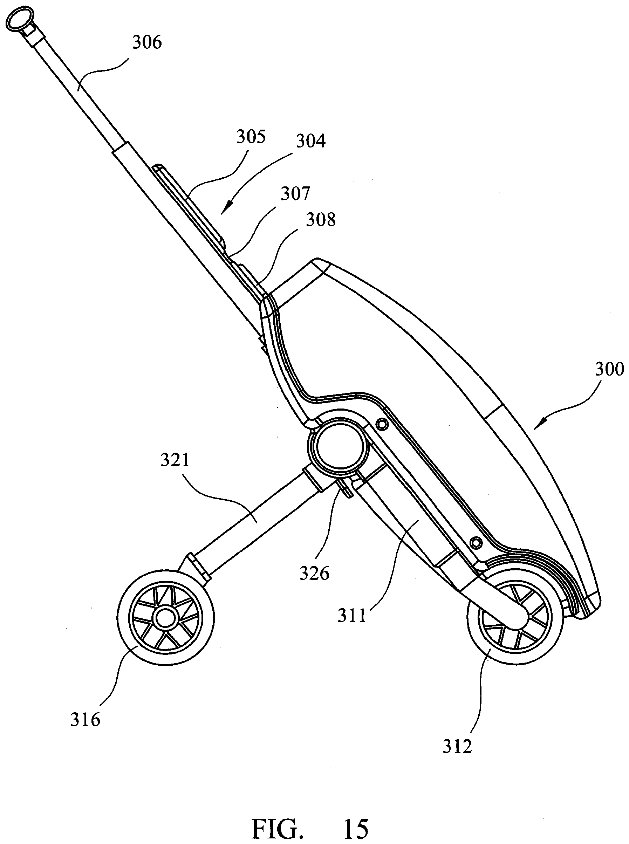

Referring now to Figures 13, 14 and 15, in which the child carrier is shown in a fully extended operative position, the foldable element 304 is rolled out and urged against the telescopic handle 306. The foldable element 304 comprises two, preferably padded, movable sections 303, 303 joined together by a first continuous hinge 307 and joined to a, preferably padded, fixed section 309 provided on the back surface of the housing 300 by a second continuous hinge 308. The two discrete movable sections 303, 305 are arranged to define a top panel and a frontal panel while the fixed section 309 is arranged to define the back panel of a substantially rectangular compartment provided on the upper part of the housing 300. Fastening means for securing the foldable element 304 to the housing 300 are described in greater detail below. When the child carrier is in the extended position, the foldable element 304 is unfastened and rolled out towards the handle 306 to open the compartment and reveal the fixed section 309 and a cross-sectional, and preferably padded, receiving surface 333 substantially perpendicular to both the fixed section 309 and the opening 360 with a cover 362. The foldable element 304 is securable to the telescopic handle 306 with ties, locking mechanisms, hoop and loop fasteners or any other suitable fastening means. In use, the fixed section 309 and movable sections 303, 305 provide a backrest 344 and headrest 355 surfaces while the receiving surface 333 acts as a seat.

As seen specifically in Figure 14, the rear part of the housing comprises on its upper part grooves arranged to receive the telescopic handle 306. A panel is provided between the telescopic handle shafts. The pivotable transverse shaft 325 is arranged to rotationally fasten the legs 321, 323 to each other so that they can move synchronously. In the extended operative position, the legs 321, 323 pivot around the axis of the transverse shaft 325 and the wheel ends extend away from the housing 300 to provide a set of wheels 316 on a plane generally perpendicular to the handle 306. Further wheels 312 are provided on further stationary legs 311, 313 located to each side of the telescopic handle shafts, between the handle shaft and the legs 321, 323. A cover is provided to protect the transverse shaft 325; the cover is connected to a lower panel between the legs. The rear wheels 316 are lockable in the extended operative position by a locking mechanism 326 having a pin or a detent provided on the cover. In use, the rear wheels 316 are therefore on a plane generally perpendicular to the telescopic handle 306 while the further wheels 312 remain on a plane generally parallel to the telescopic handle 306; as a result, the child carrier has a broad base and a low centre of gravity. The child carrier is, therefore, more stable than a ride-on suitcase.

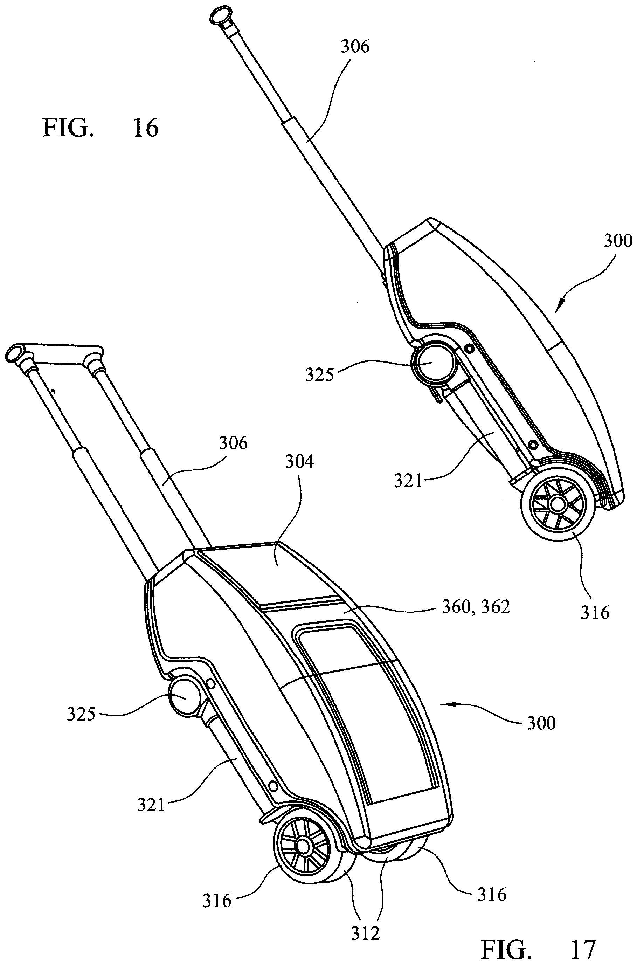

Referring now to Figures 16 and 17, the child carrier may be collapsed and manoeuvred as a suitcase by extending the telescopic handle 306 when being used to carry a child. In this handling position the telescopic handle 306 is extended and locked while legs 321, 323 lie within the overall profile of the housing 300. The locking mechanism 326 locks the transverse shaft 325 and the legs 321, 323 in their collapsed position in which the legs 321, 323 are substantially parallel to the further stationary legs 311, 313. Accordingly, the housing 300 can be rolled on all wheels 312, 316 simultaneously. On the front of the housing 300, the foldable element 304 is fastened to the housing 300 by two detents or pins, one of which is provided on the first continuous hinge 307 so as to secure the movable section 303 which defines the top part of the compartment. A further detent or pin is located on the bottom edge of the movable section 305 which defines the front panel to ensure this movable section 305 is also secured to the housing 300. In this position the compartment defined by the foldable element may be used as a further storage compartment. Further, the opening 360 is and therefore the storage compartment 302 is reachable.

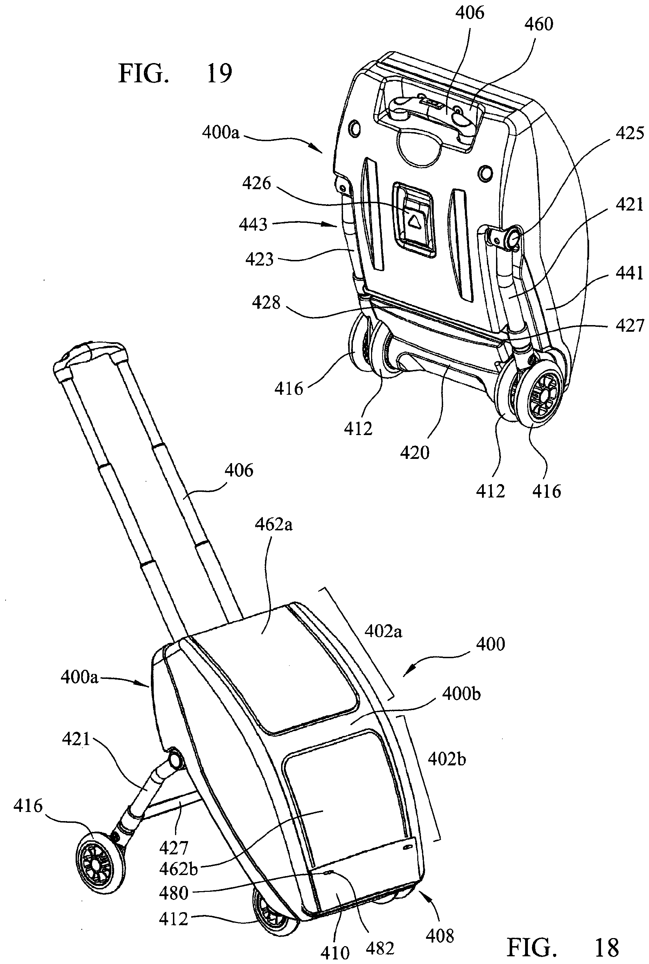

Figure 18 shows a fourth embodiment of the present invention in which the handle and wheels are in an extended position but the housing 400 is in a closed position. In this embodiment the child carrier also comprises a substantially box-shaped housing 400 having a rigid rear wall 400a and a front wall or panel 400b made from a textile or other flexible material. This embodiment also comprises a telescopic handle 406 provided on the rear wall 400a. As in previous embodiments, the telescopic handle 406 is adjustable and can be locked in at least two different positions. Further, legs 421, 423 are provided on two opposite edges of the rear side wall 400a, as in the third embodiment, each leg 421, 423 is pivotably fastened to a transverse shaft 425 on one end and axially connected to a wheel 416 on the other end. A further transverse shaft 427 on a parallel plane to transverse shaft 425 and arranged to fasten the lower end of legs 421, 423 to each other is also provided. The front panel 400b is provided with two compartments 402a and 402b and a foldable footrest 408. The upper compartment 402a, i.e. that furthest away from footrest 408, has a length of at least 30% of the total length of the housing 400 and is accessible through a zipped cover 462a. The lower compartment 402b, i.e. that closest to the footrest 408, is also accessible through a zipped cover 462b. The footrest 408 comprises a substantially rigid or semi-rigid flat sheet 410 joined to the lower edge of the front panel 400b with a strip of flexible material. The sheet 410 has two oblong openings 480, each opening is 480 arranged to receive a substantially oblong protruding rotatable fastener 482 provided on the front panel 400b. Each fastener 482 can be inserted through a respective opening 480 and then twisted to maintain the footrest 408 in a closed position. In this particular embodiment, folds of flexible material provided on the side edges of the lowermost part of the of front panel 400b secure the footrest 408 to the front panel 400b so that when the footrest 408 is in the closed position the material is folded between the flat sheet 410 and the front panel 400b. Further wheels 412 are provided on the lower end of the rear wall 400a.

Referring now to Figure 19, the rear wall 400a comprises centrally on its upper edge a cut out 460 arranged to accommodate the telescopic handle 406 when the handle 406 is in a fully collapsed position so that the handle lies within the overall profile of the case. Further cut outs 441, 443 arranged to respectively accommodate each leg 421, 423 and an end of the transverse shaft 425 when the legs are in a retracted position, that is a position in which the legs 421, 423 are substantially parallel to the rear wall 400a, are provided on the side edges of the rear wall 400a. In this embodiment, the rear wall 400a covers and therefore protects most of the transverse shaft 425 except the ends which form a joint with the upper part of each leg 421, 423. A locking mechanism 426 arranged to lock the transverse shaft 425 and the legs 421, 423 in either the extended or the retracted position is provided over the transverse shaft 425 between the legs 421, 423 on the rear wall 400a. A groove 428 arranged to accommodate the further transverse shaft 427 when the legs 421, 423 are in the retracted position is also provided on the rear wall 400a. Below the groove 428, on the lowermost part of the rear wall 400a, there is provided an axle 420 which passes through the centre of further wheels 412 thereby securing them to the housing 400. The lower corners of the rear wall 400a are profiled, in other words, the lower corners of the rear wall 400a have a reduced cross-section. As the rear wall is profiled to accommodate the legs 421, 423, further transverse shaft 427 and both sets of wheels 416, 412, these elements lie within the overall profile or envelope of the case when the legs 421, 423 are in the retracted position. The carrier of the present embodiment is therefore advantageous over other known child carriers of this type because when the case is fully closed every feature of the case lies within the overall envelope of the substantially box-shaped suitcase.

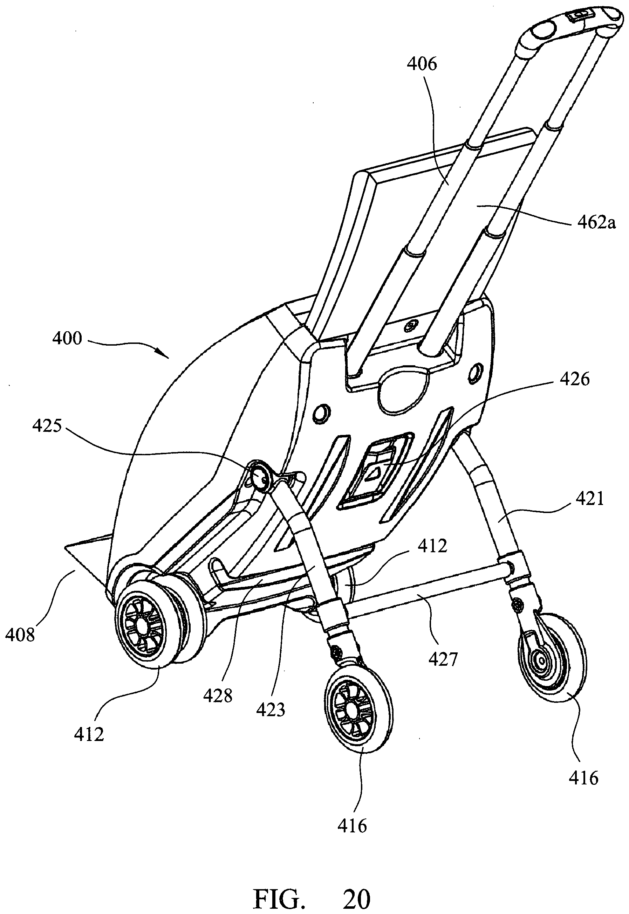

Figure 20 shows the child carrier of the present extension in a fully extended operational position. In this position the telescopic handle 406 is fully extended while the legs 421, 423 pivot on the transverse shaft 425 so that the wheels 416 move away from the rear wall 400a. As the legs 421, 423 are rotationally fastened to each other, by the transverse shaft 425 at their upper end and by the further shaft 417 at their lower end, movement of the legs 421, 423 is synchronous. In this extended position, the wheels 416 are on a plane roughly perpendicular to the telescopic handle 406 while the further wheels 412 remain on a plane generally parallel to the telescopic handle 406; as a result, the child carrier has a reasonably broad base and a low centre of gravity. Accordingly, the child carrier of this embodiment is more stable than a known child carriers. In addition, as the wheels 416 are axially connected to rotate to a respective leg 421, 423, wheels 416 are capable of spinning 360 degrees around the axis defined by the legs 421, 423. Further, the carrier is provided with four points of contact with the floor and the housing 400 can be rolled on all wheels 412, 416 simultaneously, thereby manoeuvring of the carrier is facilitated. In this extended position, the foot rest 408 is unfastened from the front panel 400a and the upper cover 462a is unzipped.

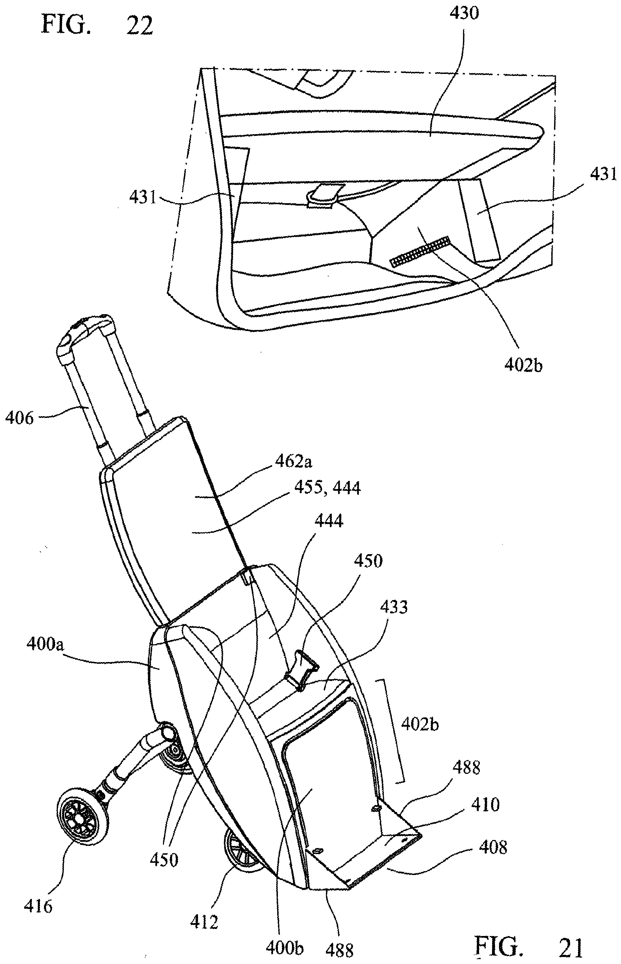

Referring now to Figure 21, the upper cover 462a is unzipped and moved towards the handle 406 so that the underside of the cover, i.e. the surface which is not visible when the cover 462a is fully zipped, creates a head receiving surface 455 and/or back receiving surface. The interior rear wall of the housing also functions as a back receiving surface 444. The upper cover 462a is secured to the handle 406 with ties, hook and loop fasteners, clamps or any other suitable fastening means. Further, the underside of the cover 455 and/or the interior rear wall of the housing 444 may be padded for comfort. A substantially flat divider is provided between the upper compartment 402a and the lower compartment 402b, roughly halfway from the top and lower edges of the housing 400. In use the upper face 433 of the divider provides a seating surface 433 to receive a child. Either both faces or the upper face of the divider may be padded for comfort. The interior walls of the upper compartment are provided with anchoring points 450 for attaching a harness for securing a child in the seat 433. It should be noted that in this extended position, only the lower compartment 402b functions as a storage compartment. Further, in the extended position the sheet 410 of the footrest 408 hinges on the strip of material which acts as a paper-type hinge while the folds of material 488 extend to allow the sheet 410 to be suspended on a plane generally perpendicular from the front panel 400b. Advantageously, as the seating surface 433 is at least 30% lower than the uppermost edge of the rear wall 400a, the carrier of the present embodiment is much more secure and stable than other known carriers. Moreover, it complies with stability requirements set in European Standard EN1888:2012.

Referring now to Figure 22, the divider 430 is suspended on side supports 431, one on each side of the interior of the housing. The lower face of the divider 430 is provided on both side edges with either hook or loops tape while each support 431 is provided on its upper face with a mating surface strip, i.e. either loop or hook surfaces respectively, so that when the seating surface 433 is in use, the divider 430 is securely fastened to the supports 431 but when the seating surface 433 is not in use the divider 430 may be unfastened and pivoted towards the interior rear wall of the housing to allow a user to access the lower compartment 402b or to create a one compartment interior.

It should be noted that the movable parts of the child carrier of all the embodiments of the present invention are arranged to lie within the profile of the substantially box-shaped suitcase. This feature is a substantial improvement over the prior art as it allows space to be used more effectively and also allows the child carrier to be transported as hand luggage provided the specific item complies with airline hand luggage dimensions. Moreover most of the embodiments also have a low centre of gravity; accordingly, the child carrier is also more stable and secure than other child carriers.

In all the embodiments described above either the seat or at least a portion of the backrest is movable (i.e. pivotable, slidable, foldable or rollable) relative to a storage compartment from a folded position to an operative position, in which operative position the child seat and backrest are arranged to receive a child to be transported. Further, in all the embodiments described above, the storage compartment is accessible both when the child carrier is in the folded and the operative position or even in a handling position in which the handle is extended to allow the child carrier to be pulled as a suitcase. These features are also an improvement over known devices.

It should be clear that features described in specifically in relation to one embodiment of the invention are applicable to the other embodiments of the invention. For example, in the third embodiment, the cover for the opening provided on the lower half of the upper part of the housing could be a hinged contoured cover pivotable to create a footrest. Although the child carrier of the first and second embodiments of the present invention has been described as having the foldable footrest and the telescopic handle on opposing outer surfaces, these components could be provided on the same outer surface.

In addition, the backrest and/or headrest described in relation to the first and second embodiments of the present invention could be provided with a latching hinge and therefore need not be permanently secured to the housing. Moreover, when a temporary or semi-permanent hinge is provided to secure the backrest and/or headrest to the housing, the backrest and/or headrest could be adapted to slide on the handle to provide an adjustable backrest and/or headrest for children of different heights.

Further, while the child carrier of the present invention has been shown as having a height higher than its width, it should be clear that the proportions could be inversed so that the child carrier had a width higher than its height. The telescopic handle and foldable footrest being in the same relative positions in relation to the ground and being provided either on one surface or opposing surfaces.

It should be clear that the continuous hinges described in relation to the foldable element of the third embodiment could be replaced with fabric or film hinges arranged to enable the foldable element to define two sides of a compartment.

In addition, it should also be apparent that the foldable element could be secured to the housing with ties, locking mechanisms, hoop and loop fasteners or any other suitable fastening means.

Although, in the third embodiment an opening is provided on the front part of the housing, it should be clear that a side opening could be provided instead or as well as a front opening. Further, two or more openings could be provided in all embodiments.

It should be noted that the footrest described in relation to the first embodiment could be slidable on runners instead of being pivotally connected to the housing.

Although the wheels and further wheels are described as omni wheels in the first embodiment, in practice, omni wheels need not be provided. Equally, it would be possible to use omni wheels only for the wheels or the further wheels. Additionally, omni wheels could be used in either or both set of wheels described in the relation to the second or third embodiments.

Moreover, a further storage compartment could be provided in the space inside the backrest and/or the headrest shown in the first and second embodiments.

Further, although the telescopic handle has been described as a telescopic handle having two substantially parallel telescopic shafts, it should be clear that a telescopic handle could be formed by a single telescopic shaft or a telescopic plate.

Although the box-shaped suitcase has been described as preferably conforming to airline carry-on luggage dimensions, it should be noted that a larger suitcase could be provided. For example, a child carrier suitable to carry twins could be provided by conforming to airline checked dimensions.

## Claims

1. A child carrier comprising:
a housing (100, 200, 300, 400) arranged to provide a storage compartment (102, 202, 302, 402), a seat (133, 233, 333, 433) and a backrest (144, 244, 344, 444);
a handle (106, 206, 306, 406) secured to a first side (400a) of the housing (100, 200, 300, 400) and arranged to allow the child carrier to be manoeuvred, wherein the first side of the housing (100, 200, 300, 400) comprises an upper portion and a lower portion, the upper portion being arranged to receive the handle (106, 206, 306, 406);
at least two wheels (116, 216, 316, 416) arranged to allow the child carrier to be wheeled along, the at least two wheels (116, 216, 316, 416) being axially secured to respective legs (114, 221, 223, 321, 323, 421, 423), which legs (114, 221, 223, 321, 323, 421, 423) are provided on two opposite edges of the first side of the housing (100, 200, 300, 400), wherein the lower portion of the first side of the housing (100, 200, 300, 400) is arranged to receive the legs (114, 221, 223, 321, 323, 421, 423); and
further wheels (112, 212, 312, 412) provided on a lower end of the lower portion of the first side of the housing (100, 200, 300, 400),
wherein either the seat (133, 233, 333, 433) or at least a portion of the backrest (144, 244, 344, 444) is movable relative to the storage compartment (102, 202, 302, 402) from a folded position to an operative position, in which operative position the child seat (133, 233, 333, 433) has a seating surface for receiving a child to be transported, and wherein the storage compartment (102, 202, 302, 402) is accessible both when the child carrier is in the folded position and when the child carrier is in the operative position;
wherein, when in the folded position, the child carrier forms a substantially box-shaped suitcase and the at least two wheels (116, 216, 316, 416) are moveable to lie within a profile of the substantially box-shaped suitcase;
wherein each leg (114, 221, 223, 321, 323, 421, 423) is substantially parallel to the handle (106, 206, 306, 406) when the child carrier is in a folded position; and
wherein the handle (106, 206, 306, 406) is extendable from a closed position lying within the profile of the substantially box-shaped suitcase
**characterised in that** the child carrier further comprises a transverse shaft (325, 425) provided on the lower portion of the first side (400a) of the housing (100, 200, 300, 400), the transverse shaft (325, 425) being arranged to fasten one leg (114, 221, 321, 421) to the other leg (114, 223, 323, 423) to allow the legs (114, 221, 223, 321, 323, 421, 423) to move synchronously, and
**in that**, when the child carrier is in the operative position, an axis defined by the legs (114, 221, 223, 321, 323, 421, 423) is generally perpendicular to a plane defined by the handle (106, 206, 306, 406) and the further wheels (112, 212, 312, 412) remain on a plane generally parallel to the plane defined by the handle (106, 206, 306, 406).

2. A child carrier according to claim 1, wherein the legs (114, 221, 223, 321, 323, 421, 423) are lockable in either the folded or the operative position by a locking mechanism (326, 426).

3. A child carrier according to claim 1 or claim 2, wherein the seating surface is located at least 30% below an uppermost part of the housing (100, 200, 300, 400).

4. A child carrier according to claim 3, wherein either the seat (133, 233, 333, 433) or the backrest (144, 244, 344) is connected to the storage compartment (102, 202, 302, 402) by a hinge.

5. A child carrier according to any preceding claim, wherein at least a portion of the backrest (144, 244, 344, 444) is a foldable element.

6. A child carrier according to any preceding claim, wherein the housing (100, 200, 300, 400) is substantially rigid.

7. A child carrier according to any preceding claim, wherein the seat (133, 233, 333, 433) is moulded integrally in a surface of the housing (100, 200, 300, 400).

8. A child carrier according to any preceding claim, wherein the child carrier, when in the folded position, has dimensions not exceeding 56 cm by 45 cm by 25cm ± 1 cm.

9. A child carrier according to claim 7, wherein the child carrier, when in the folded position, has dimensions of approximately 50 cm by 25 cm by 20 cm ± 1 cm.

10. A child carrier according to any preceding claim, wherein the at least two wheels (116, 216, 316, 416) are omni wheels.

11. A child carrier according to any preceding claim, further comprising a harness to secure a child to the child carrier.

12. A child carrier according to claim 11, wherein the harness is a two, three, four or five-point harness.

13. A child carrier according to any preceding claim, wherein the housing (100, 200, 300, 400) comprises a side access point arranged to allow a user to access the storage compartment (102, 202, 302, 402) when the seat (133, 233, 333, 433) or backrest (144, 244, 344, 444) is in the extended operative position.

14. A child carrier according to any preceding claim, wherein the at least part of the housing (100, 200, 300, 400) is made of moulded plastic material.

15. A child carrier according to any preceding claim, wherein the backrest (144, 244, 344, 444) is slidable, foldable or rollable in relation to the handle (106, 206, 306, 406).

## Patentansprüche

1. Kindertransporter, umfassend:
ein zur Bereitstellung eines Verstaufachs (102, 202, 302, 402), eines Sitzes (133, 233, 333, 433) und einer Rückenlehne (144, 244, 344, 444) ausgelegtes Gehäuse (100, 200, 300, 400);
einen an einer ersten Seite (400a) des Gehäuses (100, 200, 300, 400) befestigten Handgriff (106, 206, 306, 406), der das Manövrieren des Kinderstansporters ermöglicht, wobei die erste Seite des Gehäuses (100, 200, 300, 400) eine obere Partie und eine untere Partie umfasst und die obere Partie zur Aufnahme des Handgriffs (106, 206, 306, 406) ausgelegt ist;
mindestens zwei zum Entlangrollen des Kinderstansporters ausgelegte Räder (116, 216, 316, 416), wobei die mindestens zwei Räder (116, 216, 316, 416) axial an jeweiligen Schenkeln (114, 221, 223, 321, 323, 421, 423) befestigt sind, die an zwei einander gegenüberliegenden Rändern der ersten Seite des Gehäuses (100, 200, 300, 400) vorgesehen sind, wobei die untere Partie der ersten Seite des Gehäuses (100, 200, 300, 400) zur Aufnahme der Schenkel (114, 221, 223, 321, 323, 421, 423) ausgelegt ist; und
weitere an einem unteren Ende der unteren Partie der ersten Seite des Gehäuses (100, 200, 300, 400) vorgesehene Räder (112, 212, 312, 412),
wobei entweder der Sitz (133, 233, 333, 433) oder mindestens eine Partie der Rückenlehne (144, 244, 344, 444) gegenüber dem Verstaufach (102, 202, 302, 402) aus einer zusammengeklappten Stellung in eine Betriebsstellung bewegbar ist, in welcher der Kindersitz (133, 233, 333, 433) eine Sitzfläche zur Aufnahme eines zu transportierenden Kindes hat, und wobei das Verstaufach (102, 202, 302, 402) sowohl in der zusammengeklappten Stellung als auch in der Betriebsstellung des Kindertransporters zugänglich ist;
wobei der Kindertransporter in der zusammengeklappten Stellung einen im Wesentlichen kastenförmigen Koffer bildet und die mindestens zwei Räder (116, 216, 316, 416) innerhalb eines Profils des im Wesentlichen kastenförmigen Koffers gebracht werden können;
wobei in der zusammengeklappten Stellung des Kindertransporters die Schenkel (114, 221, 223, 321, 323, 421, 423) jeweils im Wesentlichen parallel zum Handgriff (106, 206, 306, 406) verlaufen; und
wobei der Handgriff (106, 206, 306, 406) aus einer Schließstelung innerhalb des Profils des im Wesentlichen kastenförmigen Koffers herausgezogen werden kann,
**dadurch gekennzeichnet, dass** der Kindertransporter weiterhin eine Querwelle (325, 425) an der unteren Partie der ersten Seite (400a) des Gehäuses (100, 200, 300, 400) umfasst, die zur Befestigung eines Schenkels (114, 221, 321, 421) am anderen Schenkel (114, 223, 323, 423) ausgelegt ist, um die synchrone Bewegung der Schenkel (114, 221, 223, 321, 323, 421, 423) zu ermöglichen; und
dass in der Betriebsstellung des Kindertransporters eine von den Schenkeln (114, 221, 223, 321, 323, 421, 423) definierte Achse im Allgemeinen senkrecht zu einer vom Handgriff (106, 206, 306, 406) definierten Ebene liegt und die weiteren Räder (112, 212, 312, 412) in einer Ebene bleiben, die im Wesentlichen parallel zu der vom Handgriff (106, 206, 306, 406) definierten Ebene liegt.

2. Kindertransporter nach Anspruch 1, wobei die Schenkel (114, 221, 223, 321, 323, 421, 423) mittels eines Verriegelungsmechanismus (326, 426) in der zusammengeklappten oder in der Betriebsstellung verriegelbar sind.

3. Kindertransporter nach Anspruch 1 oder, wobei die Sitzfläche mindestens 30% unterhalb eines obersten Teils des Gehäuses (100, 200, 300, 400) liegt.

4. Kindertransporter nach Anspruch 3, wobei entweder der Sitz (133, 233, 333, 433) oder die Rückenlehne (144, 244, 344) durch ein Scharnier mit dem Verstaufach (102, 202, 302, 402) verbunden ist.

5. Kindertransporter nach einem der vorhergehenden Ansprüche, wobei mindestens eine Partie der Rückenlehne (144, 244, 344, 444) ein zusammenklappbares Element ist.

6. Kindertransporter nach einem der vorhergehenden Ansprüche, wobei das Gehäuse (100, 200, 300, 400) im Wesentlichen starr ist.

7. Kindertransporter nach einem der vorhergehenden Ansprüche, wobei der Sitz (133, 233, 333, 433) einstückig in eine Oberfläche des Gehäuses (100, 200, 300, 400) eingeformt ist.

8. Kindertransporter nach einem der vorhergehenden Ansprüche, wobei der Kindertransporter in der zusammengeklappten Stellung Abmessungen von höchstens 56 cm x 45 cm x 25 cm ±1 cm hat.

9. Kindertransporter nach Anspruch 8, wobei wobei der Kindertransporter in der zusammengeklappten Stellung Abmessungen von ungefähr 50 cm x 25 cm x 20 cm ±1 cm hat.

10. Kindertransporter nach einem der vorhergehenden Ansprüche, wobei die die mindestens zwei Räder (116, 216, 316, 416) Omniräder sind.

11. Kindertransporter nach einem der vorhergehenden Ansprüche, weiter umfassend einen Gurt zum Festhalten eines Kindes am Kindertransporter.

12. Kindertransporter nach Anspruch 11, wobei der Gurt ein Zwei-, Drei-, Vier- oder Fünfpunkt-Gurt ist.

13. Kindertransporter nach einem der vorhergehenden Ansprüche, wobei das Gehäuse (100, 200, 300, 400) eine seitliche Zugangsstelle aufweist, die einem Benutzer Zugang zum Verstaufach (102, 202, 302, 402) bietet, wenn der Sitz (133, 233, 333, 433) oder die Rückenlehne (144, 244, 344, 444) in der ausgezogenen Betriebsstellung ist.

14. Kindertransporter nach einem der vorhergehenden Ansprüche, wobei mindestens ein Teil des Gehäuses (100, 200, 300, 400) ein Kunststoff-Formteil ist.

15. Kindertransporter nach einem der vorhergehenden Ansprüche, wobei die Rückenlehne (144, 244, 344, 444) im Verhältnis zum Handgriff (106, 206, 306, 406) verschoben, geklappt oder aufgerollt werden kann.

## Revendications

1. Dispositif de transport pour enfant comprenant :
un logement (100, 200, 300, 400) agencé pour fournir un compartiment de stockage (102, 202, 302, 402), un siège (133, 233, 333, 433) et un dossier (144, 244, 344, 444) ;
une poignée (106, 206, 306, 406) fixée à un premier côté (400a) du logement (100, 200, 300, 400) et agencée pour permettre au dispositif de transport pour enfant d'être manoeuvré, dans lequel le premier côté du logement (100, 200, 300, 400) comprend une portion supérieure et une portion inférieure, la portion supérieure étant agencée pour recevoir la poignée (106, 206, 306, 406) ;
au moins deux roues (116, 216, 316, 416) agencées pour permettre au dispositif de transport pour enfant d'être poussé, les au moins deux roues (116, 216, 316, 416) étant fixées axialement à des jambes respectives (114, 221, 223, 321, 323, 421, 423), lesquelles jambes (114, 221, 223, 321, 323, 421, 423) sont prévues sur deux bords opposés du premier côté du logement (100, 200, 300, 400), dans lequel la portion inférieure du premier côté du logement (100, 200, 300, 400) est agencée pour recevoir les jambes (114, 221, 223, 321, 323, 421, 423) ; et
d'autres roues (112, 212, 312, 412) prévues sur une extrémité inférieure de la portion inférieure du premier côté du logement (100, 200, 300, 400),
dans lequel le siège (133, 233, 333, 433) ou au moins une portion du dossier (144, 244, 344, 444) est mobile par rapport au compartiment de stockage (102, 202, 302, 402) d'une position pliée à une position opérationnelle, dans laquelle position opérationnelle le siège pour enfant (133, 233, 333, 433) a une surface d'assise pour recevoir un enfant devant être transporté, et dans lequel le compartiment de stockage (102, 202, 302, 402) est accessible à la fois lorsque le dispositif de transport pour enfant est dans la position pliée et lorsque le dispositif de transport pour enfant est dans la position opérationnelle ;
dans lequel, lorsqu'il est dans la position pliée, le dispositif de transport pour enfant forme une valise essentiellement en forme de boîte et les au moins deux roues (116, 216, 316, 416) sont mobiles pour se situer au sein d'un profil de la valise essentiellement en forme de boîte ;
dans lequel chaque jambe (114, 221, 223, 321, 323, 421, 423) est essentiellement parallèle à la poignée (106, 206, 306, 406) lorsque le dispositif de transport pour enfant est dans une position pliée ; et
dans lequel la poignée (106, 206, 306, 406) est extensible depuis une position fermée se situant au sein du profil de la valise essentiellement en forme de boîte,
**caractérisé en ce que** le dispositif de transport pour enfant comprend en outre une tige transversale (325, 425) prévue sur la portion inférieure du premier côté (400a) du logement (100, 200, 300, 400), la tige transversale (325, 425) étant agencée pour attacher une jambe (114, 221, 321, 421) à l'autre jambe (114, 223, 323, 423) pour permettre aux jambes (114, 221, 223, 321, 323, 421, 423) de se déplacer de manière synchrone, et
**en ce que**, lorsque le dispositif de transport pour enfant est dans la position opérationnelle, un axe défini par les jambes (114, 221, 223, 321, 323, 421, 423) est généralement perpendiculaire à un plan défini par la poignée (106, 206, 306, 406) et les autres roues (112, 212, 312, 412) restent sur un plan généralement parallèle au plan défini par la poignée (106, 206, 306, 406).

2. Dispositif de transport pour enfant selon la revendication 1, dans lequel les jambes (114, 221, 223, 321, 323, 421, 423) peuvent être verrouillées dans la position pliée ou opérationnelle par un mécanisme de verrouillage (326, 426).

3. Dispositif de transport pour enfant selon la revendication 1 ou la revendication 2, dans lequel la surface d'assise est située au moins 30 % en dessous d'une partie supérieure du logement (100, 200, 300, 400).

4. Dispositif de transport pour enfant selon la revendication 3, dans lequel le siège (133, 233, 333, 433) ou le dossier (144, 244, 344) est connecté au compartiment de stockage (102, 202, 302, 402) par une charnière.

5. Dispositif de transport pour enfant selon l'une quelconque des revendications précédentes, dans lequel au moins une portion du dossier (144, 244, 344, 444) est un élément pliable.

6. Dispositif de transport pour enfant selon l'une quelconque des revendications précédentes, dans lequel le logement (100, 200, 300, 400) est essentiellement rigide.

7. Dispositif de transport pour enfant selon l'une quelconque des revendications précédentes, dans lequel le siège (133, 233, 333, 433) est intégralement moulé dans une surface du logement (100, 200, 300, 400).

8. Dispositif de transport pour enfant selon l'une quelconque des revendications précédentes, dans lequel le dispositif de transport pour enfant a des dimensions ne dépassant pas 56 cm par 45 cm par 25 cm +/- 1 cm lorsqu'il est dans la position pliée.

9. Dispositif de transport pour enfant selon la revendication 7, dans lequel le dispositif de transport pour enfant a des dimensions d'approximativement 50 cm par 25 cm par 20 cm +/- 1 cm lorsqu'il est dans la position pliée.

10. Dispositif de transport pour enfant selon l'une quelconque des revendications précédentes, dans lequel les au moins deux roues (116, 216, 316, 416) sont des roues holonomes.

11. Dispositif de transport pour enfant selon l'une quelconque des revendications précédentes, comprenant en outre un harnais pour attacher un enfant au dispositif de transport pour enfant.

12. Dispositif de transport pour enfant selon la revendication 11, dans lequel le harnais est un harnais à deux, trois, quatre ou cinq points.

13. Dispositif de transport pour enfant selon l'une quelconque des revendications précédentes, dans lequel le logement (100, 200, 300, 400) comprend un point d'accès latéral agencé pour permettre à un utilisateur d'accéder au compartiment de stockage (102, 202, 302, 402) lorsque le siège (133, 233, 333, 433) ou le dossier (144, 244, 344, 444) est dans la position opérationnelle étendue.

14. Dispositif de transport pour enfant selon l'une quelconque des revendications précédentes, dans lequel l'au moins une partie du logement (100, 200, 300, 400) est réalisée en matériau plastique moulé.

15. Dispositif de transport pour enfant selon l'une quelconque des revendications précédentes, dans lequel le dossier (144, 244, 344, 444) peut être coulissé, plié ou roulé par rapport à la poignée (106, 206, 306, 406).
